# EUROPEAN PATENT SPECIFICATION

(11) **EP 4 640 392 B1**
(45) Date of publication and mention of the grant of the patent: **23.09.2026**
(21) Application number: 24171790.9
(22) Date of filing: 23.04.2024
(51) Int. Cl.: B27N 3/00, B27N 3/18, B27N 3/20, B27N 5/02, B29C 70/54, B31F 1/00, B27N 1/00, B27N 3/04, B27N 3/12, B27N 5/00, B29C 33/12, B29C 70/06, B29C 70/12, B29C 43/36, B31D 5/02

(54) **PRODUCT FORMING UNIT FOR DRY MANUFACTURING RIGID CELLULOSE PRODUCTS**
PRODUKTFORMUNGSEINHEIT ZUR TROCKENHERSTELLUNG VON STARREN CELLULOSEPRODUKTEN
UNITÉ DE FORMATION DE PRODUIT POUR LA FABRICATION À SEC DE PRODUITS CELLULOSIQUES RIGIDES

(43) Date of publication of application: 29.10.2025
(73) Proprietor: Yangi AB, 432 48 Varberg (SE)
(72) Inventor: LINDÉN, Frederik, 432 98 GRIMETON (SE)
(74) Representative: Brann AB

(56) References cited:
- EP-A1- 3 992 360
- US-A1- 2016 346 958
- US-A1- 2023 321 866

## Description

### Technical field of the Invention

The present invention relates in general to the field of apparatus for dry manufacturing of rigid cellulose products having essentially non-flat general shape from a cellulose blank. Such cellulose products may be used for packaging, storing, transporting and/or displaying other products such as electronics, tools, jewelry, food, dairy products, cosmetics, etc., and/or may be used as single/multiple use disposable articles. The product forming unit is especially defined to secure reliable removal of the rigid cellulose product from the moulding tool after the pressing of the cellulose blank. The term cellulose products means products that mainly consists of the cellulose part of organic matter.

The present invention relates specifically to a product forming unit for dry manufacturing rigid cellulose products, the product forming unit comprising a moulding tool having a first mould part and a second mould part, wherein at least one of the first mould part and the second mould part is displaceable in the axial direction in relation to the other in order to press the cellulose blank therebetween into final shape by applying a predetermined pressure P in the axial direction of the moulding tool, wherein the first mould part comprises a product press-surface and a scrap press-surface adjacent said product press-surface, and wherein the second mould part comprises a product press-surface and a scrap press-surface adjacent said product press-surface, said scrap press-surface of the first mould part being arranged opposite the scrap press-surface of the second mould part.

### Background of the Invention

There are many situations where it is desirable to provide two-dimensional (2D) or three-dimensional (3D) shaped objects made of sustainable materials, such as biomaterials, instead of using plastic/polymer materials. A biomaterial commonly used for packaging and disposable articles is wet moulded pulp based on cellulose fibres. Such wet moulded pulp has the advantage of being considered a sustainable material, since it is produced from biomaterials and can be recycled after use. Wet moulded pulp comprises more or less only water and separated cellulose fibers, and consequently, wet moulded pulp has been popular to use for primary packaging applications (packaging next to the article), for secondary packaging applications (assembly of such primary packages), as well as for manufacturing of disposable articles/products.

One advantage of using wet-forming techniques is that the moulding tool is usually made of a wire netting/cloth that is filled with a wet cellulose slurry and thereafter the cellulose slurry is dried and obtains the shape of the moulding tool. The final rigid cellulose product is easily removed from the wire netting.

However, a common disadvantage with all wet-forming techniques is the need for large amounts of water during the preparations of the cellulose pulp and the need for drying during the manufacturing/moulding of the cellulose product, which is a time and energy consuming step leading to low production speed and substantial high investment cost in machines and tooling. Meaning that the wet-forming techniques are not feasible to replace fossil-based alternatives neither in small nor large scale production of rigid cellulose products. Thereto, the aesthetical and mechanical properties of a wet-moulded cellulose product are hard to control with desirable precision, due to un-uniform cellulose pulp and due to the wet moulding manufacturing technique *per se.*

Therefore many actors/companies, starting a few decades ago, have changed their focus and investments towards dry-forming techniques wherein rigid cellulose products are manufactured from separated cellulose fibres that are introduced into a product forming unit in the shape of a dry cellulose blank/web, wherein the cellulose blank is formed/moulded into the shape of the intended cellulose product and wherein the cellulose fibres are bonded to each other using heat and pressure. The dry-forming techniques comprises different steps of generating an air-laid cellulose blank, that is fed into a product forming unit, i.e. thermo-forming press.

The technical field of dry manufacturing rigid cellulose products having essentially non-flat general shape, such as trays, lids, or the like, i.e. wherein the forming/pressing is performed in one step using a moulding tool having a first/female mould part and a second/male mould part configured to cooperate with each other, is well known. However, the sub-technical field of reliably removing the final rigid cellulose products from the moulding tool, is still exposed to challenges.

It is known within another technical field of pressing metal sheets into non-flat general shape, to use a suction device/cup to remove the final product from the moulding tool. In such situations, should there be a problem concerning reliable removal of the pressed metal product, for instance due to misalignment of the pressed metal product in the first mould part, one may advantageously lower the under-pressure level of the suction device and mechanically force the suction device harder against the metal sheet. These measures will not provide damage to the pressed metal product. However, such measures would be disastrous should there be a problem concerning reliable removal of pressed cellulose product originating from an air-laid cellulose blank, wherein the pressed cellulose product has become misaligned in relation to the first mould part after the pressing of the cellulose product.

The cellulose blank that is fed/transported into the moulding tool is more or less fluffy, i.e. having a bulk of short/small separated cellulose fibres that are loosely connected to each other in the shape of a blank/web. During the moulding/pressing of the rigid cellulose product having non-flat general shape, the separated cellulose fibres will become compacted, but the pressed cellulose product is still fragile. Thus, there is an immediate risk for pressed cellulose products that has become misaligned in relation to the first mould part during the opening of the moulding tool after the pressing of the cellulose product, that the suction device will not properly engage the cellulose product which may lead to fully unsatisfied removal or partial tearing of the cellulose product. In such situations the production/manufacturing has to be abruptly stopped and the machine be manually cleaned and checked. If the moulding tool is not empty upon start of the next loading/pressing cycle the moulding tool may become damaged.

Trying to lower the under-pressure level of the suction device and mechanically forcing the suction device harder against the surface of the pressed cellulose product will only increase the risk of damaging the cellulose product. For wet moulded cellulose products, such misalignment of the cellulose product will not arise.

Thereto, in a situation when the pressed cellulose product stick to the second mould part, i.e. wrong mould part, the suction device during lowering will contact the surface of the warm moulding tool and partly melt and stick to the surface of the first mould part, which will have negative effect on and discolour the next cellulose product to be pressed. Thereto the suction device will attach firmly to the metal surface and risk breaking the out-feed device when the suction device is raised to lift the non-present cellulose product. Thus, the system assumes that it has engaged/grasped the cellulose product and initiate lifting.

US2023321866A1 discloses a multi-cavity forming mould system for forming a plurality of discrete three-dimensional cellulose products from an air-formed cellulose blank structure, including a first mould part and a second mould part arranged for cooperating with each other during forming of the cellulose products.

Thus, there is still a need in the art for a reliable, cheap and unharmful dry-forming technique/process for dry manufacturing rigid cellulose products having non-flat general shape, wherein the pressed cellulose products as well as the out-feed device are protected from damage during the step of removal of the cellulose product from the moulding tool.

### Object of the Invention

The present invention aims at obviating the aforementioned and other disadvantages and failings of previously known methods and devices for dry manufacturing rigid cellulose products, and at providing an improved product forming unit for dry manufacturing rigid cellulose products having non-flat general shape, wherein reliable removal of pressed cellulose product originating from an air-laid cellulose blank from the moulding tool is secured.

A primary object of the present invention is to provide an improved product forming unit for dry forming/manufacturing rigid cellulose products having non-flat general shape, wherein the environmental benefits as well as time and energy saving benefits of conventional dry-forming techniques are maintained. It is another object of the present invention to provide an improved product forming unit for dry forming/manufacturing rigid cellulose products having non-flat general shape, wherein the pressed cellulose products are protected from damage during the step of removal of the cellulose product from the moulding tool. It is another object of the present invention to provide an improved product forming unit for dry forming/manufacturing rigid cellulose products having non-flat general shape, wherein the out-feed device is protected from damage during the step of removal of the cellulose product from the moulding tool.

### Summary of the Invention

According to the invention at least the primary object is attained by means of the initially defined product forming unit having the features defined in claim 1. Preferred embodiments of the present invention are further defined in the dependent claims.

According to a first aspect of the present invention, there is provided a product forming unit of the initially defined type, wherein the moulding tool further comprises a retaining means configured to retain the pressed cellulose product in contact with the first mould part after the pressing of the cellulose product, the retaining means comprising an axially extending pin connected to the scrap press-surface of the first mould part and an axially extending bore arranged in the scrap press-surface of the second mould part, wherein said pin is configured to enter into said bore during pressing of the cellulose product, and wherein said pin comprises a bulging body and a thinner waist located between the bulging body and the scrap press-surface of the first mould part.

Thus, the present invention is based on the insight that it is of uttermost importance to have control of the location of the pressed cellulose blank when the moulding tool is opened after the pressing of the cellulose blank, in order to secure reliable engagement and removal of the pressed cellulose product without damaging the pressed cellulose products or the out-feed device during the step of removal of the delicate cellulose product from the moulding tool. Thus, the inventors have realized that forcing the rigid cellulose blank to retain its position and alignment in the first mould part, i.e. in the intended mould part from which the cellulose product shall be collected, will secure that the delicate cellulose product will be removed from the moulding tool at minimal risk. The pressed cellulose product as well as the out-feed device is prevented from being damaged.

The present invention provides the advantage that the pressed cellulose product is always properly aligned in order to be easily and correctly removed by the out-feed device, and thereby contact between the first mould part of the moulding tool, which may be warm, and the suction device is also always prevented. The present invention provides the advantage that the ratio of successful removal of un-damaged cellulose products will increase, and less interruptions in the production/manufacturing.

According to various example embodiments of the present invention the cross-sectional area of the bore is equal to or more than 2,5 times the maximum cross-sectional area of the bulging body of the pin, seen in the transversal/radial direction. According to various example embodiments of the present invention the cross-sectional area of the bore is equal to or less than 5 times the maximum cross-sectional area of the bulging body of the pin, seen in the transversal/radial direction. Thereby the retaining means will not have negative effect on the closing of the moulding tool before pressing the cellulose blank and still provide a big enough retaining force on the pressed cellulose product during the opening of the moulding tool after the pressing of the cellulose blank.

Further advantages with and features of the invention will be apparent from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
- Fig. 1: is a schematic illustration of a production line or apparatus for dry manufacturing rigid cellulose products,
- Fig. 2: is a schematic illustration of a moulding tool, wherein a cellulose blank is provided into the moulding tool between the first/female mould part and the second/male mould part,
- Fig. 3: is a schematic illustration of the moulding tool according to figure 2 during forming/pressing of the cellulose product,
- Fig. 4: is a schematic illustration of the moulding tool according to figures 2 and 3 when the moulding tool is opened after the forming/pressing step, and the pressed cellulose product is retained in the first mould part,
- Fig. 5: is a schematic illustration of an out-feed device that has engaged the cellulose product, wherein the cellulose product is removed from the moulding tool,
- Fig. 6: is a schematic illustration of the pressed cellulose product according to figures 4 and 5, wherein the scrap area is removed from the final cellulose product,
- Fig. 7: is a schematic illustration of a pin according to a first embodiment,
- Fig. 8: is a schematic illustration of a pin according to a second embodiment,
- Fig. 9: is a schematic illustration of a pin according to a third embodiment,
- Fig. 10: is a schematic illustration of a pin according to a fourth embodiment, and
- Fig. 11: is a schematic illustration of a pin according to a fifth embodiment.

### Detailed description of preferred embodiments of the invention

As used herein, the term "air/dry moulding/forming or air/dry laying/laid" means a well-known method according to which separated cellulose fibres are formed into a cellulose blank/sheet.

In air-laying technique, small/short fibres having a normal length in the range of 0,5 to 70 mm, for instance 1 to 10 mm, are separated and captured by an air stream/flow, and then laid on/applied to a forming mesh/surface, usually using a low pressure at the other side of the mesh/surface. The general terms "air/dry laying" and "air/dry moulding" are used interchangeably herein. The cellulose fibre carrying air flow may be generated by suitable device located upstream and/or downstream the forming mesh/surface.

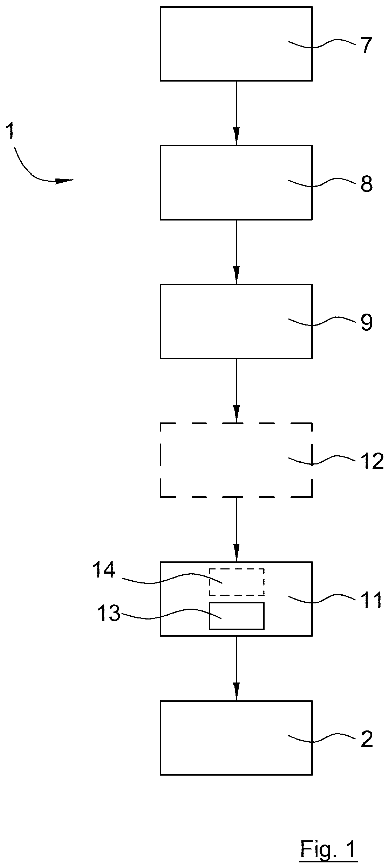

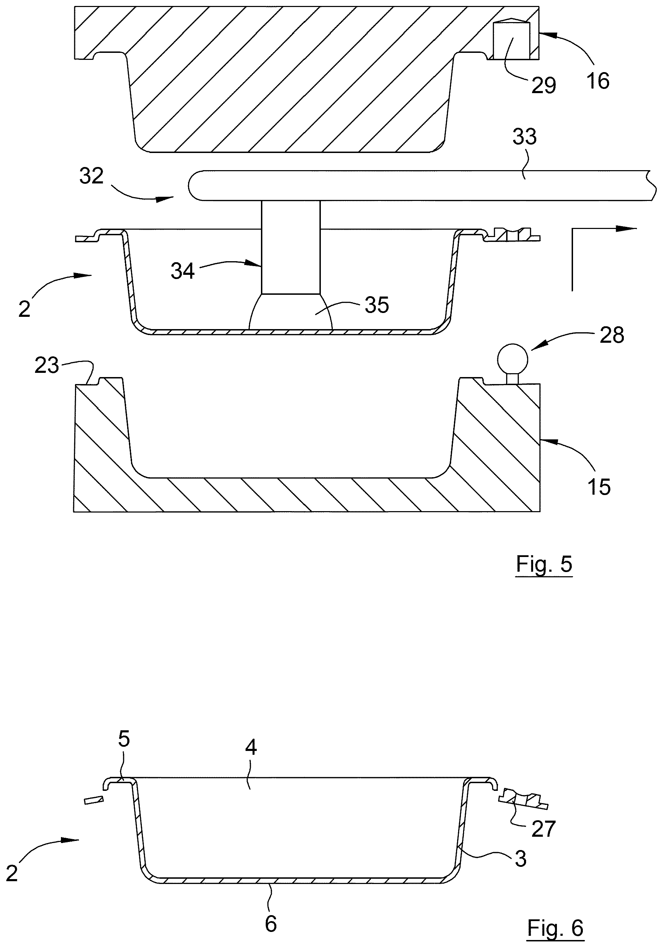

Reference is initially made to figures 1 and 6, wherein figure 1 disclose a schematic illustration of a generic production line/apparatus for dry manufacturing rigid cellulose products, wherein said apparatus is generally designated 1. The production line 1 is configured for manufacturing rigid cellulose products, generally designated 2, having essentially non-flat general shape from separated cellulose fibres. Such a production line 1 may be arranged and set-up according to different well-known ways. Figure 6 disclose an example of a rigid cellulose product/tray 2. The apparatus 1 may have automatic transfer/handling between the different process steps, and/or may have manual transfer/handling between the different process steps, and thereto the apparatus 1 may have intermediate storing and/or additional process steps between the disclosed process steps, and/or the process steps may be located at different sites.

Figure 6 disclose an example of a rigid cellulose product 2 in the shape of a tray/container, wherein the tray is formed using the inventive apparatus. The tray 2 comprises an inclined circumferential wall 3 and an opening 4 defined by a circumferential rim/brim 5 connected to the upper/free end of the wall 3. According to figure 6 embodiment the brim 5 has an angled shape having an essentially radially extending upper surface and a turned-down outer edge, however it shall be pointed out that the cross-section of the brim 5 may have other shapes. The tray 2 may have truncated cone shape having straight wall 3, narrowing in the direction away from the opening 4, in accordance with figure 6 embodiment. The tray 2 may for instance have curved-shaped wall 3 seen in the axial plane. By having inclined walls 3 multiple trays 2 are stackable one inside the other when they are empty. The tray could also be a mug/cup, a lid, packaging or the like container/product. The cross section of the circumferential wall 3 in the radial plane may have any suitable shape, circular, oval, rectangular, polygonal, etc., and may differ in shape and/or dimension along the axial extension of the tray 2. The tray 2 comprises a bottom 6, wherein the bottom 6 is entirely flat or the bottom may comprise local ribs, projections, etc., for strength and rigidity of the cellulose product. The bottom 6 may be located at the very lower end of the wall 3, according to figure 6 embodiment, and/or be partly located at an axial distance from the lower end of the wall 3, or a combination thereof. The circumferential wall 3 is connected to and extends in the axial direction upwards from the bottom portion 6.

Cellulose raw material 7, i.e. comprising mainly the cellulose part of organic matter, is provided to the production line, and is fed to a separating/disintegrating unit 8 in order to obtain individualized/separated cellulose fibres. The separated cellulose fibres are thereafter transported by an air stream/flow to a dispenser of a cellulose blank/sheet forming unit 9. The cellulose fibres are laid by the dispenser on a moving or stationary perforated surface of the cellulose blank forming unit 9. The cellulose fibre carrying air flow may be generated by suitable device located upstream and/or downstream the perforated surface. Thereafter the generated cellulose blank, generally designated 10, is transported/transferred to a product forming unit 11, whereby rigid cellulose products 2 are formed and discharged from the product forming unit 11.

The cellulose blank forming unit 9 may be configured to generate a continuous cellulose blank/web 10 and/or discontinuous/discrete cellulose blanks 10. Discontinuous/discrete cellulose blanks 10 are fed into the product forming unit 11.

The cellulose raw material 7 may be in the form of reeled pulp or paper, bale of cellulose pulp, paper, etc. and/or sheets of paper, cellulose pulp, etc. In case said cellulose raw material 7 is in the form of sheets and/or reeled pulp or paper, it can be fed directly into the separating unit 8. However, in case said cellulose raw material 7 is in the form of a bale or compact stacks of sheets, etc. one or more shredders and/or one or more additional separating/disintegrating units 8 may be necessary to be used for separating and dosing said cellulose raw material 7 from said bale or sheets in smaller quantities. The shredder(s) prepare cellulose raw material 7 to be accepted by said separating unit 8. The separating unit 8 disintegrates the cellulose raw material 7 into separated cellulose fibres. Said one or plurality of shredder(s) are arranged before said one or a plurality of separating unit(s) 8, so that an output of one of said shredder is connected to an input of one of said separating units 8. The shredders may be arranged in parallel to each other or in series with each other, and the disintegrating units 8 may be arranged in parallel to each other or in series with each other. The shredders and the disintegrating units 8 together constitute a cellulose fibre separating unit, arranged upstream the cellulose blank forming unit 9.

Said cellulose raw material 7 may be constituted by virgin cellulose fibres and/or recycled cellulose fibres and may originate from wood pulps such as kraft pulp, sulphite pulp, mechanical pulp, thermomechanical pulp (TMP), chemical treated mechanical pulp, chemi-thermomechanical pulp (CTMP), and/or from non-wood pulps such as bagasse, bamboo, abaca, hemp, flax, cotton.

The separating unit 8 may according to various embodiments be constituted by a hammer mill. In said separating unit 8 the cellulose raw material is separated into fibres having a normal length in the range of 0,5-70 mm, preferably less than 10 mm. The length of said fibres may be customized by adjusting the internal properties of the separating unit 8 and/or by choosing a different separating unit 8 and/or choosing different cellulose raw material 7. The fibre length for wood pulp is according to various embodiments in the range 0,5-4 mm, preferably in the range 1,7-3,6 mm. According to various embodiments the fibre length for non-wood pulp is in the range 0,5-70 mm.

The production line 1 may comprise a pre-compression and/or imprinting unit 12, located downstream the cellulose blank forming unit 9 and upstream the product forming unit 11. In the pre-compression and/or imprinting unit 12, an air-laid fluffy cellulose blank 10 having a first thickness may be compressed into a cellulose blank 10 having a second thickness, wherein said second thickness is thinner than said first thickness, and/or may be provided with an imprinting pattern. During the pre-compression/imprinting the cellulose blank is made more coherent and easier to handle, since the pre-compression/imprinting generates internal bindings between individual cellulose fibres preventing mutual separation of the cellulose fibres.

The product forming unit 11 comprises a press unit 13, and may optionally comprise a pre-heating unit 14 arranged upstream the press unit 13. According to various example embodiments said cellulose blank 10 may be heated to an elevated temperature before being fed into the press unit 13 of the product forming unit 11. In such embodiment(s) where the cellulose blank 10 is preheated before being fed into the press unit 13, said press unit 13 may or may not comprise heating. According to various example embodiment said press unit 13 may be a heated press unit 13 for heating said cellulose blank 10 during pressing. In the case of a heated press unit 13, preheating of said cellulose blank 10 using a pre-heating unit 14 is optional. According to various example embodiments preheating of the cellulose blank 10 in said pre-heating unit 14 may be combined with a heated press unit 13. Having a pre-heating unit 14 in combination with a heated press unit 13 will speed up the manufacturing process in the product forming unit 11, and improve the quality/rigidity of the final rigid cellulose product 2. In the product forming unit 11 the cellulose blank 10 is heated to a temperature in the range 120 - 200 °C in order to obtain adequate rigidity and strength in the final cellulose product 2.

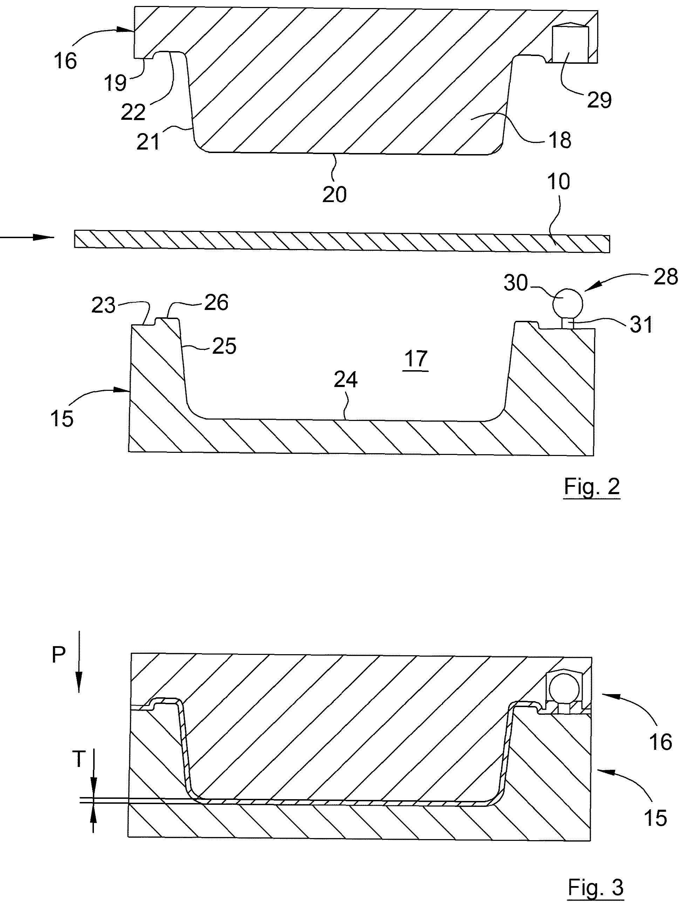

Reference is now made to figures 2-5. The press unit 13 comprises a moulding tool having a first mould part 15 and a second mould part 16 having co-operating designs, wherein at least one of the first mould part 15 and the second mould part 16 is/are displaceable in the axial direction in relation to each other, i.e. reciprocating back and forth in relation to each other, in order to exert pressure to the cellulose blank 10 loaded therebetween. In the figures the mutual displacement is disclosed as being vertical, however the mutual displacement may be horizontal or any other suitable angle. The cellulose blank 10 loaded into the moulding tool, is constituted by the air-laid cellulose blank 10. The air-laid cellulose blank 10 may be generated upstream the product forming unit 11 in the same apparatus/production line and provided/transferred to the product forming unit 11, or may be generated at a separate location and provided/transferred to the product forming unit 11 via intermediate handling and storage.

According to various embodiments the first mould part 15 of the moulding tool is a female mould part, i.e. having a main recess 17 for receiving a major part of the cellulose blank 10, and the second mould part 16 of the moulding tool is a male mould part, i.e. having a main protrusion 18 for cooperation with said recess 17 of the female mould part by being inserted therein, such that the cellulose blank 10 is pressed into a final rigid non-flat shape by applying a predetermined pressure P in the axial direction of the moulding tool. According to the disclosed embodiment the male mould part 16 is located above the female mould part 15, but according to alternative embodiments the female mould part may be the second mould part and may be located above the male mould part which is then the first mould part. The pressed cellulose product 2 is intended to remain in/on the first mould part 15 after the pressing of the cellulose blank 10, irrespective of the angular orientation of the moulding tool.

The male/second mould part 16 comprises a product press-surface and a scrap press-surface 19 adjacent said product press-surface. In the disclosed example embodiment, the product press-surface of the second mould part 16 comprises a bottom surface 20, a wall surface 21 connected to the bottom surface 20 and extending essentially in the axial direction, and a brim surface 22 connected to the wall surface 21 and extending essentially in the transversal/radial direction. According to various embodiments, the scrap press-surface 19 of the second mould part 16 surrounds the entire product press-surface. According to other embodiments, the scrap press-surface 19 of the second mould part 16 is only located at some locations around the product press-surface. The female/first mould part 15 comprises a product press-surface and a scrap press-surface 23 adjacent said product press-surface. In the disclosed example embodiment, the product press-surface of the first mould part 15 comprises a bottom surface 24, a wall surface 25 connected to the bottom surface 24 and extending essentially in the axial direction, and a brim surface 26 connected to the wall surface 25 and extending essentially in the transversal/radial direction. According to various embodiments, the scrap press-surface 23 of the first mould part 15 surrounds the entire product press-surface. According to other embodiments, the scrap press-surface 23 of the first mould part 15 is only located at some locations around the product press-surface. The scrap press-surface 23 of the first mould part 15 is arranged opposite the scrap press-surface 19 of the second mould part 16.

The cellulose blank 10 is pressed between the surfaces of the male/second mould part 16 and the surfaces of the female/first mould part 15 into final shape. The mutual distance, taken perpendicular to the surface in question, between the product press-surface of the female/first mould part 15 and the product press-surface of the male/second mould part 16 during the pressing of the cellulose blank 10 is T millimetres, wherein T preferably is in the range 0,2-2,5 millimetres, i.e. equal to the thickness of the bottom 6 of the pressed cellulose product 2. Preferably, T is in the range 0,3-1,5 millimetres. The wall surfaces 21, 25 of the moulding tool has to be inclined in order to obtain a release angle for the cellulose product, and in order to obtain adequate press force to the wall region 3 of the cellulose product 2.

At the scrap area of the moulding tool, the mutual distance between the scrap press-surface 23 of the first mould part 15 and the scrap press-surface 19 of the second mould part 16 is equal to or more than the mutual distance between the product press-surface of the first mould part 15 and the product press-surface pf the second mould part 16. The part of the cellulose blank 10 located at the scrap area may be partially compressed by applying a predetermined partial pressure less than said predetermined pressure P, or be fully compressed by applying said predetermined pressure P. Thus, radially outside the final rigid cellulose product 2, the cellulose blank 10 comprises a scrap area intended to be cut off. In figure 5 the cellulose product 2 is released and schematically removed from the moulding tool by opening the moulding tool. Figure 6 disclose a schematic illustration of a cellulose tray 2 wherein the scrap 27 is cut off from the cellulose tray 2. According to various embodiments, the scrap 27 may be removed in a separate step in the moulding tool, or preferably in a subsequent step outside the moulding tool after the pressing of the cellulose blank 10.

According to various embodiments. When the compartment of the rigid cellulose tray 2 is filled with objects, a film/cover/lid may be attached to the circumferential rim/brim 5 of the cellulose tray 2, for instance using heat lamination. The lid film may be constituted by a multilayer film comprising polymer, metal, and/or paper.

According to various embodiments. Before any items are placed in the compartment of the rigid cellulose tray, the rigid cellulose tray 2 may be provided with a liner film adhered to at least to the circumferential rim/brim 5, and preferably also to the wall 3 and/or the bottom 6 of the cellulose tray 2. The liner film may be constituted by a multilayer film comprising polymer and/or metal. The adhesion of the liner film to the tray is preferably heat activated.

According to various embodiments, the cellulose blank 10 may comprise barrier additives and/or material property enhancing additives, etc., such that the rigid cellulose tray 2 withstand grease, fat, water, vapour, etc. The additives are preferably provided to the cellulose fibers upstream the disintegrating unit 8 or between the disintegrating unit 8 and the product forming unit 11.

The predetermined pressure P is in the range 40-10000N/cm², preferably in the range 100-4000N/cm². According to various embodiments said predetermined pressures are above 1000 N/ cm², and according to various embodiments said predetermined pressures are below 2500 N/ cm². The holding time during the pressing step is in equal to or more than 1 second and equal to or less than 10 seconds, preferably less than 5 seconds, and most preferably less than 3 seconds.

Figures 2-5 disclose a first schematic embodiment of the inventive product forming unit 11. The moulding tool comprises a retaining means configured to retain the pressed cellulose product 2 in contact with the first mould part 15 after the pressing of the cellulose product 2. The retaining means comprising an axially extending pin, generally designated 28, connected to the scrap press-surface 23 of the first mould part 15 and an axially extending bore 29 arranged in the scrap press-surface 19 of the second mould part 16. The pin 28 is configured to enter into said bore 29 during pressing of the cellulose product 2, and the pin 28 comprises a bulging body 30 and a thinner waist 31 located between the bulging body 30 and the scrap press-surface 23 of the first mould part 15. Thus, the waist 31 has less diameter/cross section than the diameter/cross section of the bulging body 30. The moulding tool may comprise a plurality of retaining means.

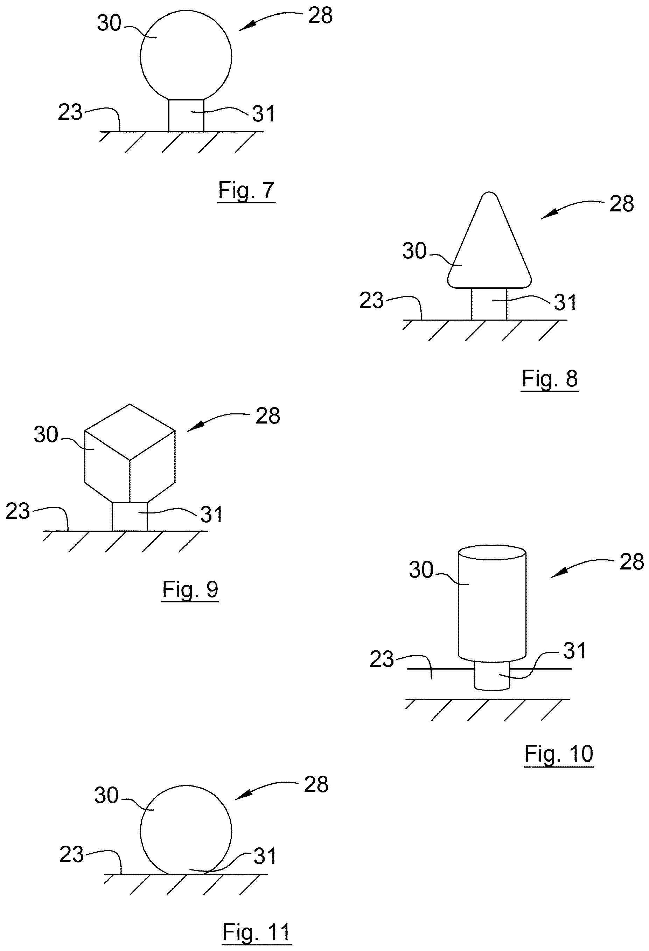

Reference is also made to figures 7-11, disclosing different schematic embodiments of the pin 28 of the retaining means. The bulging body 30 shall have a greater diameter and a greater cross-sectional area than the waist 31, which is thinner than the bulging body 30. Figure 7 disclose the first embodiment of the pin 28, wherein pin 28 is constituted by a ball pin, wherein the bulging body 30 has an essentially spherical shape and wherein the waist 31 is constituted by a stem, wherein the diameter/cross section of the stem is less than the biggest diameter/cross section of the bulging body 30. Figure 8 disclose a second embodiment of the pin 28, wherein the bulging body 30 is constituted by a cone/pyramid and wherein the waist 31 is constituted by a stem, wherein the diameter/cross section of the stem is less than the biggest diameter/cross section of the bulging body 30. Figure 9 disclose a third embodiment of the pin 28, wherein the bulging body 30 is constituted by a cube/rhomb and wherein the waist 31 is constituted by a stem, wherein the diameter/cross section of the stem is less than the biggest diameter/cross section of the bulging body 30. Figure 10 disclose a fourth embodiment of the pin 28, wherein the bulging body 30 is constituted by a cylinder and wherein the waist 31 is constituted by a stem, wherein the diameter/cross section of the stem is less than the biggest diameter/cross section of the bulging body 30. Figure 11 disclose a fifth embodiment of the pin 28, wherein the waist 31 is constituted by the lower part of the bulging body 30 which is connected directly to the scrap press-surface 23 of the first mould part 15, i.e. applicable when the bulging body 30 comprises a decreasing diameter and decreasing cross-sectional area in the direction towards the scrap press-surface 23 of the first mould part 15. According to non-disclosed alternative embodiments the pin may be shaped as the figure eight, the pin may be a bolt having the bolt head located at a distance from the scrap press-surface 23, etc. According to various embodiments the bulging body 30 of the axially extending pin 28 has a circular cross-sectional area, seen in the transversal direction.

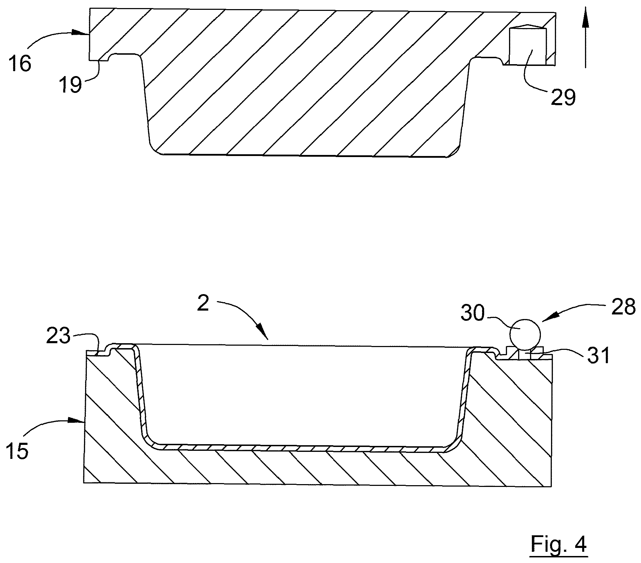

During the pressing of the cellulose blank 10, the cellulose blank 10 is uncompressed at the bore 29 but is at least partly penetrated by the pin 28 as can be seen in figures 3 and 4 in such a way that a part of the cellulose blank 10 will become located below the bulging body 30 of the pin 28 and will retain the pressed cellulose product 2 in contact with the first mould part 15 and in correct alignment as can be seen in figure 4.

According to various embodiments the cross-sectional area of the bore 29 is equal to or more than 2,5 times the maximum cross-sectional area of the bulging body 30 of the pin 28, seen in the transversal direction. Having a tighter fit between the bore 29 and the pin 28 entails that the cellulose blank 10 risk being cut off at the interface between the mouth of the bore 29 and the bulging body 30 of the pin 28 and thereby no part of the cellulose blank 10 will become located below the bulging body 30.

According to various embodiments the cross-sectional area of the bore 29 is equal to or less than 5 times the maximum cross-sectional area of the bulging body 30 of the pin 28, seen in the transversal direction. Having a greater bore 29 in relation to the pin 28 entails that the cellulose blank 10 will only be draped over the pin 28 and the pin will not penetrate into the cellulose blank 10 and thereby no part of the cellulose blank 10 will become located below the bulging body 30.

According to various embodiments the depth of the bore 29 is equal to or more than 3 millimetres deeper than the height of the pin 28, in order to secure that pressing of the cellulose product 2 is not negatively effected. Thus, the minimum distance is greater than the thickness of the pressed cellulose product 2.

Reference is now especially made to figure 5, that in addition to the moulding tool discloses an out-feed device, generally designated 32 and schematically illustrated. The out-feed device 32 comprises a movable arm 33 and a suction device 34 connected to said arm 33. The suction device 34 of the out-feed device 32 is insertable into the moulding tool between the first mould part 15 and the second mould part 16 after the pressing of the cellulose product 2 in order to engage the cellulose product 2 located in the first mould part 15.

Thus, the out-feed device 32 is configured to remove the pressed cellulose product 2 from the moulding tool in order to make the moulding tool empty and ready for the loading of the next cellulose blank 10. Thus, part of the out-feed device 32 is insertable into the moulding tool between the male/second mould part 16 and the female/first mould part 15 after the pressing of the cellulose product 2. Thus, the pressed cellulose product 2 is intended to be located in/on the first mould part 15 after the pressing of the cellulose product 2, and when the moulding tool is opened the cellulose product 2 is retained by means of the pin 28. Thereto, the out-feed device 32 may be arranged to transport the pressed cellulose product 2 to a subsequent step in the apparatus such as trimming of the scrap 27 and/or stacking. The out-feed device 32 makes use of a pneumatic arrangement to grasp and release the cellulose product 2. The movable arm 33 of the out-feed device 32 is mechanically controlled and operated, e.g. a robotic arm.

The suction device 34 is insertable into the moulding tool between the male/second mould part 16 and the female/first mould part 15, and the suction device 34 is preferably inserted into the moulding tool during the opening of the moulding tool, i.e. when the male mould part 16 and/or the female mould part 15 are traveling away from each other after the pressing of the cellulose blank 10. By starting the insertion of the suction device 34 already before the moulding device is fully open, the pressing cycle time may be decreased, i.e. as long as the different members does not collide.

The suction device 34 is a pneumatic arrangement, that preferably comprises a suction cup 35 configured to engage the cellulose product 2. The suction cup 35 may be made of a resilient material, a rigid material, or a combination thereof, wherein the pressure level in the volume defined by the suction cup 35 is controllable/adjustable. According to various embodiments, at least the lower rim of the suction cup 35 is made of a resilient material in order to obtain better air-tight seal between the suction device 34 and surface of the cellulose product 2. According to various embodiments, the pressure level in the volume defined by the suction cup may be above as well as below normal/ambient air pressure.

A low pressure level entails that the suction device 34 engage/holds the cellulose product 2, and a high pressure level entails that the suction device 34 ejects/drops the cellulose product 2. Alternatively, normal/ambient air pressure is used in order to drop the cellulose product 2. The out-feed device 32 may comprise a high-pressure source HP and a low-pressure source LP, wherein the suction device 34 is connected thereto and possibly also to ambient air using an assembly of conduits and controllable valves, in order to alternate therebetween. Alternatively, the out-feed device 32 may comprise only a low-pressure source LP, wherein the suction device 34 is connected thereto and to ambient air using an assembly of conduits and controllable valves, in order to alternate therebetween. The out-feed device 32 may comprise a plurality of suction devices 34.

According to various embodiments, during engagement the low-pressure level is such that the total lifting force from the suction cup(s) 35 is preferably in the range 10-1000 times the weight of the cellulose product 2. Using a higher low-pressure level there is an increased risk that the cellulose product will not be removed from the moulding tool, and using a lower low-pressure level there is an increased risk that the suction cup 35 will leave a mark on the surface of the cellulose product 2.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims**.** Thus, the equipment may be modified in all kinds of ways within the scope of the appended claims.

## Claims

1. Product forming unit (11) for dry manufacturing rigid cellulose products (2) having essentially non-flat general shape from a cellulose blank (10), the product forming unit (11) comprising a moulding tool having a first mould part (15) and a second mould part (16), wherein at least one of the first mould part (15) and the second mould part (16) is displaceable in the axial direction in relation to the other in order to press the cellulose blank (10) therebetween into final shape by applying a predetermined pressure P in the axial direction of the moulding tool, wherein the first mould part (15) comprises a product press-surface and a scrap press-surface (23) adjacent said product press-surface, and wherein the second mould part (16) comprises a product press-surface and a scrap press-surface (19) adjacent said product press-surface, said scrap press-surface (23) of the first mould part (15) being arranged opposite the scrap press-surface (19) of the second mould part (16),
wherein the moulding tool comprises a retaining means configured to retain the pressed cellulose product (2) in contact with the first mould part (15) after the pressing of the cellulose product (2), the retaining means comprising an axially extending pin (28) connected to the scrap press-surface (23) of the first mould part (15) and an axially extending bore (29) arranged in the scrap press-surface (19) of the second mould part (16), wherein said pin (28) is configured to enter into said bore (29) during pressing of the cellulose product (2), and wherein said pin (28) comprises a bulging body (30) and a thinner waist (31) located between the bulging body (30) and the scrap press-surface (23) of the first mould part (15).

2. The product forming unit (11) according to claim 1, wherein the bulging body (30) of the axially extending pin (28) has a circular cross-sectional area, seen in the transversal direction.

3. The product forming unit (11) according to claim 1 or 2, wherein the axially extending pin (28) is constituted by a ball pin, the bulging body (30) having an essentially spherical shape.

4. The product forming unit (11) according to any preceding claim, wherein the cross-sectional area of the bore (29) is equal to or more than 2,5 times the maximum cross-sectional area of the bulging body (30) of the pin (28), seen in the transversal direction.

5. The product forming unit (11) according to any preceding claim, wherein the cross-sectional area of the bore (29) is equal to or less than 5 times the maximum cross-sectional area of the bulging body (30) of the pin (28), seen in the transversal direction.

6. The product forming unit (11) according to any preceding claim, wherein the depth of the bore (29) is equal to or more than 3 millimetres deeper than the height of the pin (28).

7. The product forming unit (11) according to any preceding claim, wherein the product forming unit (11) further comprises an out-feed device (32) having a movable arm (33) and a suction device (34) connected to said arm (33), the suction device (34) of the out-feed device (32) being insertable into the moulding tool between the first mould part (15) and the second mould part (16) after the pressing of the cellulose product (2) in order to engage the cellulose product (2) located in the first mould part (15).

## Patentansprüche

1. Produktausbildungseinheit (11) zur Trockenherstellung von starren Zelluloseprodukten (2) mit einer im Wesentlichen nicht flachen allgemeinen Form aus einem Zellulose-Rohling (10), wobei die Produktausbildungseinheit (11) ein Formwerkzeug mit einem ersten Formteil (15) und einem zweiten Formteil (16) aufweist, wobei mindestens eines des ersten Formteils (15) und des zweiten Formteils (16) in der axialen Richtung in Bezug auf das andere verschiebbar ist, um den Zellulose-Rohling (10) dazwischen in die Endform zu pressen, indem ein vorbestimmter Druck P in der axialen Richtung des Formwerkzeugs aufgebracht wird, wobei das erste Formteil (15) eine Produkt-Pressfläche und eine zur Produkt-Pressfläche benachbarte Ausschuss-Pressfläche (23) beinhaltet, und wobei das zweite Formteil (16) eine Produkt-Pressfläche und eine zur Produkt-Pressfläche benachbarte Ausschuss-Pressfläche (19) aufweist, wobei die Ausschuss-Pressfläche (23) des ersten Formteils (15) der Ausschuss-Pressfläche (19) des zweiten Formteils (16) gegenüberliegend angeordnet ist,
wobei das Formwerkzeug ein Haltemittel aufweist, das dazu eingerichtet ist, das gepresste Zelluloseprodukt (2) nach dem Pressen des Zelluloseprodukts (2) in Kontakt mit dem ersten Formteil (15) zu halten, wobei das Haltemittel einen sich axial erstreckenden Stift (28), der mit der Ausschuss-Pressfläche (23) des ersten Formteils (15) verbunden ist, und eine sich axial erstreckende Bohrung (29) aufweist, die in der Ausschuss-Pressfläche (19) des zweiten Formteils (16) angeordnet ist, wobei der Stift (28) dazu eingerichtet ist, während des Pressens des Zelluloseprodukts (2) in die Bohrung (29) einzutreten, und wobei der Stift (28) einen bauchigen Körper (30) und eine dünnere Taille (31) aufweist, die zwischen dem bauchigen Körper (30) und der Ausschuss-Pressfläche (23) des ersten Formteils (15) angeordnet ist.

2. Produktausbildungseinheit (11) nach Anspruch 1, wobei der bauchige Körper (30) des sich axial erstreckenden Stifts (28) in der Querrichtung gesehen einen kreisförmigen Querschnitt aufweist.

3. Produktausbildungseinheit (11) nach Anspruch 1 oder 2, wobei der sich axial erstreckende Stift (28) durch einen Kugelstift gebildet wird, wobei der bauchige Körper (30) eine im Wesentlichen kugelförmige Form aufweist.

4. Produktausbildungseinheit (11) nach einem der vorstehenden Ansprüche, wobei die Querschnittsfläche der Bohrung (29) in der Querrichtung gesehen gleich oder größer als das 2,5-fache der maximalen Querschnittsfläche des bauchigen Körpers (30) des Stifts (28) ist.

5. Produktausbildungseinheit (11) nach einem der vorstehenden Ansprüche, wobei die Querschnittsfläche der Bohrung (29) in der Querrichtung gesehen gleich oder kleiner als das 5-fache der maximalen Querschnittsfläche des bauchigen Körpers (30) des Stifts (28) ist.

6. Produktausbildungseinheit (11) nach einem der vorstehenden Ansprüche, wobei die Tiefe der Bohrung (29) gleich oder mehr als 3 Millimeter tiefer ist als die Höhe des Stifts (28).

7. Produktausbildungseinheit (11) nach einem der vorstehenden Ansprüche, wobei die Produktausbildungseinheit (11) ferner eine Entnahmeeinrichtung (32) mit einem beweglichen Arm (33) und einer mit dem Arm (33) verbundenen Saugeinrichtung (34) aufweist, wobei die Saugeinrichtung (34) der Entnahmeeinrichtung (32) nach dem Pressen des Zelluloseprodukts (2) in das Formwerkzeug zwischen dem ersten Formteil (15) und dem zweiten Formteil (16) einführbar ist, um mit dem im ersten Formteil (15) angeordneten Zelluloseprodukt (2) in Eingriff zu kommen.

## Revendications

1. Unité de formation de produit (11) pour la fabrication à sec de produits cellulosiques (2) rigides ayant essentiellement une forme générale non plate à partir d'une ébauche cellulosique (10), l'unité de formation de produit (11) comportant un outil de moulage ayant une première partie de moule (15) et une deuxième partie de moule (16), dans laquelle au moins l'une parmi la première partie de moule (15) et la deuxième partie de moule (16) est apte à être déplacée dans la direction axiale par rapport à l'autre afin de presser l'ébauche cellulosique (10) entre elles en la forme finale par l'application d'une pression P prédéterminée dans la direction axiale de l'outil de moulage, dans laquelle la première partie de moule (15) comporte une surface de pressage de produit et une surface de pressage de morceaux (23) adjacente à ladite surface de pressage de produit, et dans laquelle la deuxième partie de moule (16) comporte une surface de pressage de produit et une surface de pressage de morceaux (19) adjacente à ladite surface de pressage de produit, ladite surface de pressage de morceaux (23) de la première partie de moule (15) étant agencée à l'opposé de la surface de pressage de morceaux (19) de la deuxième partie de moule (16),
dans laquelle l'outil de moulage comporte des moyens de retenue configurés pour retenir le produit cellulosique (2) pressé en contact avec la première partie de moule (15) après le pressage du produit cellulosique (2), les moyens de retenue comportant une goupille (28) s'étendant axialement reliée à la surface de pressage de morceaux (23) de la première partie de moule (15) et un alésage (29) s'étendant axialement agencé dans la surface de pressage de morceaux (19) de la deuxième partie de moule (16), dans laquelle ladite goupille (28) est configurée pour entrer dans ledit alésage (29) pendant le pressage du produit cellulosique (2), et dans laquelle ladite goupille (28) comporte un corps bombé (30) et un étranglement (31) plus mince situé entre le corps bombé (30) et la surface de pressage de morceaux (23) de la première partie de moule (15).

2. Unité de formation de produit (11) selon la revendication 1, dans laquelle le corps bombé (30) de la goupille (28) s'étendant axialement possède une aire de section transversale circulaire, observée dans la direction transversale.

3. Unité de formation de produit (11) selon la revendication 1 ou 2, dans laquelle la goupille (28) s'étendant axialement est constituée d'une goupille à rotule, le corps bombé (30) ayant une forme essentiellement sphérique.

4. Unité de formation de produit (11) selon une quelconque revendication précédente, dans laquelle l'aire de section transversale de l'alésage (29) est égale ou supérieure à 2,5 fois l'aire de section transversale maximale du corps bombé (30) de la goupille (28), observée dans la direction transversale.

5. Unité de formation de produit (11) selon une quelconque revendication précédente, dans laquelle l'aire de section transversale de l'alésage (29) est égale ou inférieure à 5 fois l'aire de section transversale maximale du corps bombé (30) de la goupille (28), observée dans la direction transversale.

6. Unité de formation de produit (11) selon une quelconque revendication précédente, dans laquelle la profondeur de l'alésage (29) est égale ou supérieure à 3 millimètres de profondeur de plus que la hauteur de la goupille (28).

7. Unité de formation de produit (11) selon une quelconque revendication précédente, dans laquelle l'unité de formation de produit (11) comporte en outre un dispositif de déchargement (32) ayant un bras mobile (33) et un dispositif d'aspiration (34) raccordé audit bras (33), le dispositif d'aspiration (34) du dispositif de déchargement (32) étant apte à être inséré dans l'outil de moulage entre la première partie de moule (15) et la deuxième partie de moule (16) après le pressage du produit cellulosique (2) afin de mettre en prise avec le produit cellulosique (2) situé dans la première partie de moule (15).
